# EUROPEAN PATENT APPLICATION

(11) **EP 4 714 624 A2**
(43) Date of publication of application: **25.03.2026**
(21) Application number: 25202890.7
(22) Date of filing: 17.09.2025
(51) Int. Cl.: B28B 7/00, B28B 7/34, B28B 7/36, B28B 11/08, B28B 17/00, B33Y 50/00, B33Y 80/00, G06T 5/60, G06T 15/04, B29C 33/38, B29C 59/00, B44C 3/02, B44F 9/02, B44F 9/04

(54) **METHOD OF MANUFACTURING A TEXTURED BUILDING PRODUCT**

(30) Priority: 18.09.2024 GB 202413743
(71) Applicant: Ibstock Brick Limited, Leicestershire LE67 1HS (GB)
(72) Inventor: LIGHTFOOT, Sonny, Bristol, BS16 1QY (GB); WHITE, Michael, Bristol, BS16 1QY (GB); JORGENSEN, Tavs, Bristol, BS16 1QY (GB); FOSTER, Adam, Leicester, LE67 6HS (GB); TURNER, Nigel, Leicester, LE67 6HS (GB)
(74) Representative: Hambley, Christopher John

(57) **Abstract**

The present disclosure provides a method of manufacturing a textured building product. The method comprises: a) creating a heightmap of a textured surface (14); b) using the heightmap to create a 3D model of a textured embosser (10) comprising the textured surface; c) using additive manufacturing to produce a textured embosser based on the 3D model; and d) imparting the textured surface of the textured embosser onto a surface of a building material (30) to produce a textured building product (34).

## Description

### FIELD

The present disclosure relates to a method of manufacturing a textured building product. Aspects of the disclosure relate to a method of manufacturing a textured building product, to a method of manufacturing a textured embosser, to a building product, and to a textured embosser.

### BACKGROUND

Building products, such as bricks, brick slips or roof tiles, are widely used in the construction of building structures, such as walls and roofs. For example, such building products may be formed as a block or slab of dried clay building material. In some examples, clay building products may manufactured via an extrusion process. However, the extruded clay material is generally devoid of any surface texture, which may be undesirable for bricks, brick slips and/or roof tiles.

The present teachings seek to overcome or at least mitigate one or more problems associated with the prior art.

### SUMMARY

The present teachings provide a method of manufacturing a textured building product, a building product and a method of manufacturing a textured embosser according to the appended claims.

An aspect of the teachings provides a method of manufacturing a textured building product, the method comprising:
a) creating a heightmap of a textured surface;
b) using the heightmap to create a 3D model of a textured embosser comprising the textured surface;
c) using additive manufacturing to produce a textured embosser based on the 3D model; and
d) imparting the textured surface of the textured embosser onto a surface of a building material to produce a textured building product.

Such a method involves a digital process for producing the textured embosser. This facilitates the use of various digital tools such as artificial intelligence algorithms to increase flexibility in the number of different textured surfaces that can be provided on the textured embosser. Therefore, through step d) the method facilitates increased flexibility in the number of different textured building products (e.g., bricks, breeze blocks, tiles, paving members, cladding members, etc.) that can be produced.

In this context, the term "textured embosser" may be used to refer to any textured object which can be used to impart a textured surface onto a building material. For example, a textured cylindrical roller which can be rolled along a building material to impart a textured surface to the building material may be considered a "textured embosser". Similarly, a hollow mould having a textured internal surface for imparting a textured surface to building material received in the mould (e.g., by compressing semi-solid building material into the mould, or by hardening/curing a building material slurry in the mould) may also be considered a "textured embosser".

It will be understood that various commercially available additive manufacturing apparatuses (also known as "3D printers") could be used to produce the textured embosser, e.g., "Prusa XL" or "Bambu S1 Carbon".

The textured building product may comprise a discrete block or slab of building material which can be used with other textured building products of the same kind to construct a building structure or surface (e.g., of a residential, industrial or commercial building). For example, the textured building product may be a brick, brick slip, floor tile, roof tile, wall tile, paving member or breeze block (e.g., of clay or concrete material). In other words, step d) may be carried out on a building material prior to use in or on a building (e.g., in a factory or other off-site setting), rather than being carried out directly on a building (e.g., to a rendered surface on a building).

Optionally, the building material comprises clay or concrete building material. In other words, step d) may comprise imparting the textured surface of the textured embosser onto a surface of a clay or concrete building material to produce a clay or concrete textured building product.

Optionally, the textured embosser comprises a textured cylindrical roller. Optionally, step b) comprises applying the heightmap to a 3D model of a cylindrical roller having the textured surface on an external surface thereof.

Such a textured cylindrical roller may be used as a roller stamp embosser to roll along a surface of a building material (e.g., a clay building material) to impart the textured surface thereon.

It will be understood that various commercially available software tools could be used to create the 3D model of the textured cylindrical roller (e.g., to apply the heightmap to a cylindrical mesh), e.g., "Blender".

Optionally, the textured cylindrical roller comprises a hollow cylindrical sleeve which includes the textured surface.

It will be understood that additive manufacturing may be slower and more expensive than other manufacturing techniques, but that it offers an easier means of producing a textured object from a 3D model. By printing the textured surface on a hollow cylindrical sleeve, the textured cylindrical roller can be manufactured more quickly than a solid additively manufactured alternative.

Optionally, the method further comprises sliding the hollow cylindrical sleeve onto a cylindrical core.

By sliding the hollow cylindrical sleeve onto a cylindrical core (e.g., a core produced by a traditional manufacturing technique) a textured cylindrical roller with increased rigidity and structural strength can be provided. Further, such a combination of hollow cylindrical sleeve and cylindrical core may be produced more cheaply and quickly than a solid roller produced via additive manufacturing. In addition, this configuration may allow interchanging different hollow cylindrical sleeves on the cylindrical core for production of different textured building products.

Optionally, the step of producing a textured building product comprises extruding an elongate length of the building material and imparting the textured surface along the elongate length of the extruded building material with the textured cylindrical roller. Optionally, the method further comprises cutting the extruded building material after the textured surface has been imparted to form a plurality of textured building products.

Such a method facilitates manufacturing of textured building products of different lengths (e.g., by modifying the length between cuts in the building material). This may also facilitate production of elongate building products that would require long moulds to be manufactured using alternative techniques.

In other embodiments, the textured embosser is a hollow mould having a textured internal surface.

In other embodiments, the textured embosser is a substantially flat mould. For example, a building material receptacle having a base and one or more side walls may be provided, and the substantially flat mould may be located on the base and/or one or more side walls. In this way, when building material is input to the receptacle (and, optionally, compressed) the textured surface is imparted onto the building material.

In other embodiments, the textured embosser is a cylindrical casting mould, wherein step b) comprises applying the heightmap to a cylindrical mesh to create a 3D model of a cylindrical casting mould having the textured surface on an internal surface thereof.

Optionally, the method comprises:
a) creating a first heightmap of a first component of the textured surface, and creating a second heightmap of a second component of the textured surface;
b) using the first and second heightmaps to create 3D models of first and second textured embossers comprising the respective components of the textured surface;
c) using additive manufacturing to produce first and second textured embossers based on the 3D models; and
d) imparting the first component of the textured surface onto a surface of a building material using the first embosser and then imparting the second component of the textured surface onto the surface of the building material using the second embosser to produce a textured building product.

In this way, the first and second textured embossers together impart a blended textured surface to the building material having both a first component of the textured surface and a second component of the textured surface.

Optionally, the textured surface comprises a plurality of peaks each defining a height and a plurality of troughs each defining a depth.

Optionally, the first component of the textured surface comprises heights and depths above a predetermined threshold, and the second component of the textured surface comprises heights and depths below said predetermined threshold.

The first component of the textured surface comprising heights and depths above a predetermined threshold (e.g., "macro" features) and the second component of the textured surface comprising heights and depths below the predetermined threshold (e.g., "micro" features), allows a blended textured surface having both macro and micro components may be imparted to the building material.

It will be understood that the height of the peaks may be defined as a distance between the peaks and an average height of the textured surface. Similarly, the depth of the troughs may be defined as a distance between the troughs and the average height of the textured surface. For example, when the textured surface is a cylindrical textured surface (e.g., on textured cylindrical roller), the heights and depths may define radial distances.

Optionally, the textured surface comprises a plurality of widths between adjacent peaks and troughs.

Optionally, the first component of the textured surface comprises widths above a predetermined threshold, and the second component of the textured surface comprises widths below said predetermined threshold.

The first component of the textured surface comprising widths above a predetermined threshold (e.g., "macro" features) and the second component of the textured surface comprising widths below the predetermined threshold (e.g., "micro" features), allows a blended textured surface having both macro and micro components may be imparted to the building material.

In some embodiments, the first component of the textured surface comprises greater heights and/or depths and/or widths than the second component of the textured surface. Generally speaking, the first component of the textured surface may comprise larger features than the second component of the textured surface (e.g., features which are larger in at least one dimension).

Optionally, the step of creating a heightmap of a textured surface comprises performing a 3D scan of an existing textured object to produce a 3D scan model.

It will be understood that various commercially available 3D scanners could be used to perform the 3D scan, e.g., "Creaform GoSCAN".

Optionally, the step of creating a heightmap of a textured surface comprises converting the 3D scan model to a heightmap; optionally, using an artificial intelligence algorithm.

It will be understood that various commercially available software tools could be used to convert the 3D scan model to a heightmap, e.g., "Blender", or the "Grasshopper" scripting plugin for "Rhino3D".

Optionally, the existing textured object comprises a non-planar textured surface. Optionally, the method comprises flattening the 3D scan model to produce a flattened model having a planar version of the textured surface. Optionally, the method comprises converting the flattened model to a heightmap.

In this way, a non-planar textured surface (e.g., a curved textured surface such as a cylindrical textured surface) can be converted to a planar representation which can more easily be converted to a heightmap.

It will be understood that various commercially available software tools could be used to flatten the 3D scan model, e.g., "Rhino3D" or "Blender".

Optionally, the method comprises using an artificial intelligence algorithm to flatten the 3D scan model.

Optionally, the existing textured object is a textured cylindrical roller.

Optionally, the existing textured object is a natural object, for example selected from one or more of an animal shell, a part of a tree such as branches or bark, a leaf, and/or a natural stone surface.

Optionally, the existing textured object is an existing building product, for example selected from one or more of a brick, a breeze block, a tile, a paving member, and/or a cladding member.

Optionally, the step of creating a heightmap of a textured surface comprises converting an image of a textured surface to a heightmap.

This offers a simple means of producing a heightmap. In addition, images of textured surfaces may be more readily-available (e.g., using a camera or digitally generated image) than alternatives such as 3D scan models.

It will be understood that various commercially available software tools could be used to convert the image of the textured surface to a heightmap, e.g., "Adobe Substance Sampler".

Optionally, the method comprises using an artificial intelligence algorithm to convert the image of the textured surface to a heightmap.

Optionally, the method comprises capturing an image of an existing textured object using a camera and converting the captured image to a heightmap.

This provides a simple means of providing an image of a textured surface, since cameras are readily available and can be used to photograph a wide variety of textured surfaces.

Optionally, the existing textured object is a natural object, for example selected from one or more of an animal shell, a part of a tree such as branches or bark, a leaf, and/or a natural stone surface.

Optionally, the existing textured object is an existing building product, for example selected from one or more of a brick, a breeze block, a tile, a paving member, and/or a cladding member.

Optionally, the method comprises using an artificial intelligence algorithm to generate an image of a new textured surface based on text and/or image prompts input to the artificial intelligence algorithm, and converting the generated image to a heightmap.

This provides a simple means of providing an image of a textured surface. Further, this allows generation of new textured surfaces, which provides more flexibility in the number of different textured surfaces that can be produced in comparison to capturing images of existing textured surfaces.

It will be understood that various commercially available AI image generation software tools could be used to produce the generated image, e.g., "Adobe AI Image Generator", "Microsoft Designer" or "DeepAI".

Optionally, the method comprises manually creating an image of a new textured surface, and converting the manually created image to a heightmap.

For example, an image of a decorative pattern to be imparted on a building product may be manually using digital artistic software or graphic design software.

Optionally, the method further comprises using an artificial intelligence algorithm to enhance the image prior to converting to a heightmap. Optionally, the method comprises using an artificial intelligence algorithm to: increase a resolution of the image, and/or add depth to one or more patterns in the image, and/or generate a new image which is an interpretation of the image, and/or add more detail to the image.

Optionally, the step of creating a heightmap of a textured surface comprises creating a procedural texture which defines a mathematical description of a textured surface, and converting the procedural texture to a heightmap.

In this context, the term "procedural texture" will be understood to mean a texture created using mathematical algorithms (e.g., to simulate natural materials such as wood, marble, or stone, and/or more complex textures combining multiple different textures). Such a procedural texture may be expanded indefinitely with a certain degree of randomness. This may be beneficial for producing large building products where it is undesirable to see repetition of patterns in the textured surface.

It will be understood that various commercially available software tools could be used to create the procedural texture, e.g., "Adobe Substance Designer".

Optionally, the method comprises using an artificial intelligence algorithm to generate the procedural texture.

Optionally, the step of creating a procedural texture comprises blending at least two individual procedural textures to produce a blended procedural texture.

Blending at least two individual procedural textures facilitates production of new procedural textures. For example, a first procedural texture (e.g., which simulates a natural material such as wood) may be blended with a second procedural texture (e.g., representative of white noise) to produce a blended procedural texture.

Optionally, the method comprises:
producing a first textured embosser based on a first procedural texture and producing a second textured embosser based on a second procedural texture; and
imparting a first textured surface of the first textured embosser onto a surface of a building material and then imparting a second textured surface of the second textured embosser onto the surface of the building material to produce a textured building product.

In other words, the first and second textured embossers may define first and second components of a blended textured surface, the first and second components being defined by the respective procedural textures.

Optionally, the method comprises altering the heightmap to produce a modified heightmap prior to creating the 3D model.

Such a method may allow customisation and/or tuning of the heightmap to change the size and/or aesthetics of the textured surface.

It will be understood that various commercially available software tools could be used to alter the heightmap, e.g., "Adobe Photoshop".

Optionally, the method comprises using an artificial intelligence algorithm to alter the heightmap.

Optionally, the step of altering the heightmap comprises applying a high pass filter to the heightmap.

Applying a high pass filter to the heightmap may remove the effects of macro scale surface variations.

Optionally, the method comprises expanding the area of the heightmap to produce an enlarged heightmap.

For example, the method may comprise expanding the X and/or Y dimensions of the heightmap. In this way, a larger 3D model can be made which allows production of a larger textured embosser having the textured surface (at step c).

It will be understood that various commercially available software tools could be used to produce the enlarged heightmap, e.g., "Adobe AI Fill".

Optionally, the method comprises using an artificial intelligence algorithm to expand the area of the heightmap. Optionally, the artificial intelligence algorithm comprises an AI image generation algorithm configured to outpaint the heightmap.

Optionally, the textured embosser comprises a textured cylindrical roller. Optionally, step b) comprises applying the heightmap to a 3D model of a cylindrical roller having the textured surface on an external surface thereof. Optionally, the step of altering the heightmap comprises adjusting one or more edges of the heightmap so that there is no seam when the heightmap is applied to the 3D model of the cylindrical roller.

In this way, the textured cylindrical roller can be used to produce continuous or "seamless" textured surfaces on building products.

It will be understood that various commercially available software tools could be used to fill in the seam, e.g., "Adobe AI Fill".

Optionally, the step of adjusting one or more edges of the heightmap comprises offsetting a canvas of the heightmap and filling in a seam, optionally using an AI image generation algorithm configured to fill the seam.

Optionally, the method comprises increasing a depth of the heightmap to produce the modified heightmap; optionally, using an artificial intelligence algorithm.

In this way, a 3D model with a more pronounced textured surface can be created. This may be useful for imparting a more pronounced textured surface on a building product.

In other words, the method includes increasing the height difference between peaks and troughs of the original heightmap. Put another way, the method involves upscaling the height dimension of the original heightmap.

Optionally, the method comprises rotating the heightmap about a centre of the heightmap to produce the modified heightmap; optionally, rotating through 90 degrees.

Optionally, the method comprises increasing a resolution of the heightmap to produce the modified heightmap; optionally, using an artificial intelligence algorithm.

In this way, a more detailed textured surface can be provided on the textured embosser.

It will be understood that various commercially available software tools could be used to increase the resolution of the heightmap, e.g., "AI Upscale".

A further aspect of the teachings provides a method of manufacturing a textured building product, the method comprising:
a) using an artificial intelligence algorithm to create a 3D model of a textured embosser having a textured surface;
b) using additive manufacturing to produce a textured embosser based on the 3D model; and
c) imparting the textured surface of the embosser onto a surface of a building material (e.g., a clay or concrete building material) to produce a textured building product (e.g., a clay or concrete textured building product).

Such a method involves use of an artificial intelligence algorithm to create the 3D model, which increases flexibility in the number of different textured surfaces that can be provided on the textured embosser. For example, text or image prompts could be input to the artificial intelligence algorithm to generate a new textured surface. Therefore, through step c) the method facilitates increased flexibility in the number of different textured building products (e.g., bricks, breeze blocks, tiles, paving members, cladding members, etc.) that can be produced.

Optionally, the step of using an artificial intelligence algorithm to create a 3D model comprises generating a 3D model based on text and/or image prompts input to the artificial intelligence algorithm.

Optionally, the textured embosser comprises a textured cylindrical roller. Optionally, the textured cylindrical roller is in the form of a hollow cylindrical sleeve. Optionally, the method further comprises sliding the hollow cylindrical sleeve onto a cylindrical core. Optionally, the step of producing a textured building product comprises extruding an elongate length of the building material and imparting the textured surface along the elongate length of the extruded building material with the textured cylindrical roller. Optionally, the method further comprises cutting the extruded building material after the textured surface has been imparted to form a plurality of textured building products.

In other embodiments, the textured embosser is a hollow mould having a textured internal surface. In other embodiments, the textured embosser is a substantially flat mould. For example, a building material receptacle having a base and one or more side walls may be provided, and the substantially flat mould may be located on the base and/or one or more side walls. In this way, when building material is input to the receptacle (and, optionally, compressed) the textured surface is imparted onto the building material. In other embodiments, the textured embosser is a cylindrical casting mould, wherein step b) comprises applying the heightmap to a cylindrical mesh to create a 3D model of a cylindrical casting mould having the textured surface on an internal surface thereof.

Optionally, the step of using an artificial intelligence algorithm to create a 3D model comprises performing a 3D scan of an existing textured object to produce a 3D scan model, and modifying the 3D scan model using an artificial intelligence algorithm. Optionally, the existing textured object is a textured cylindrical roller. Optionally, the existing textured object is a natural object, for example selected from one or more of an animal shell, a part of a tree such as branches or bark, a leaf, and/or a natural stone surface. Optionally, the existing textured object is an existing building product, for example selected from one or more of a brick, a breeze block, a tile, a paving member, and/or a cladding member.

Optionally, the step of using an artificial intelligence algorithm to create a 3D model comprises converting an image of a textured surface to a 3D model using an artificial intelligence algorithm.

Optionally, the method comprises capturing an image of an existing textured object using a camera. Optionally, the existing textured object is a natural object, for example selected from one or more of an animal shell, a part of a tree such as branches or bark, a leaf, and/or a natural stone surface. Optionally, the existing textured object is an existing building product, for example selected from one or more of a brick, a breeze block, a tile, a paving member, and/or a cladding member.

Optionally, the method comprises manually creating an image of a new textured surface.

Optionally, the method further comprises using an artificial intelligence algorithm to enhance the image prior to converting to a 3D model. Optionally, the method comprises using an artificial intelligence algorithm to: increase a resolution of the image, and/or add depth to one or more patterns in the image, and/or generate a new image which is an interpretation of the image, and/or add more detail to the image.

Optionally, the step of using an artificial intelligence algorithm to create a 3D model comprises using the artificial intelligence algorithm to generate a procedural texture and converting the procedural texture to a 3D model (e.g., using text and/or image prompts input to the artificial intelligence algorithm).

Optionally, the step of using additive manufacturing to produce a textured embosser based on the 3D model comprises:
producing a first embosser portion in a first additive manufacturing stage;
producing a second embosser portion in a second additive manufacturing stage; and
joining the first and second embosser portions together to form the textured embosser.

In this way, a textured embosser can be produced which is bigger than the maximum size of object than can be produced with the additive manufacturing apparatus used to perform the additive manufacturing process.

Optionally, the first embosser portion has a first interface end and the second embosser portion has a second interface end. Optionally, the first and second interface ends are configured to abut each other for joining the first and second embosser portions together. Optionally, the first and second interface ends have complementary non-linear profiles. Optionally, the complementary non-linear profiles track a profile of the textured surface.

The complementary non-linear profiles may define a jagged intersection between the first and second embosser portions.

Optionally, the method comprises splitting the 3D model into first and second model portions for producing the first and second embosser portions.

Optionally, the method comprises post processing the textured embosser before applying the textured embosser to the building material.

For example, a "brim" may be printed on the textured embosser during the additive manufacturing process to aid adhesion to a bed of the additive manufacturing apparatus. Such a brim may be removed during post processing.

Optionally, the textured embosser is produced from a plastics material.

Plastics material may be cheaper and easier to use in an additive manufacturing process than other materials.

Optionally, the plastics material is a substantially rigid material such as a rigid bioplastic material, e.g., a polylactic acid material (PLA).

Rigid plastics material may be particularly beneficial for prototype embossers, which may be imparted onto building material by hand during a prototyping process. In particular, less compression force may be required to impart the textured surface of the textured embosser onto a building material than more flexible alternatives.

Rigid bioplastic such as PLA is cheap and fast to print in an additive manufacturing process, which makes it a particularly suitable choice for producing prototype textured embossers.

Optionally, the plastics material is an elastic plastics material such as a polyurethane plastics material, e.g., a thermoplastic polyurethane material (TPU), e.g., a high flow thermoplastic polyurethane material (TPU-HF).

Elastic plastics material is particularly beneficial for flexibility and impact resistance for long-term use (e.g., as part of an automated building product manufacturing line).

Polyurethane plastics material such as TPU is an example of a suitable elastic plastics material. TPU-HF may be particularly beneficial for faster additive manufacturing of the textured embosser.

Optionally, the building material comprises clay building material.

Optionally, the method comprises firing the clay building material after imparting the textured surface on the clay building material in order to harden the textured building product.

Optionally, the clay building material comprises a water content in the range of about 18% to about 24%.

Such a clay building material has been found to be particularly beneficial for manufacturing building products, since it is plastic in nature making it suitable for shaping, imparting and retaining a texture on a building product. It will be understood that if the clay building material has a water content that is too high (e.g. much greater than 24%) the clay material would be too viscous for the textured surface of the textured embosser to be imparted on the building product (e.g. the clay building material may not maintain its shape after the textured embosser has been applied to the clay building material). Furthermore, a high clay water content requires more energy when firing the building product in a kiln or similar apparatus. It will also be understood that if the clay building material has a water content that is too low, the clay building material may not be plastic enough for the textured surface of the textured embosser to be imparted on the building product (e.g., even under the application of pressure).

In alternative embodiments, the building material may comprise concrete building material.

Optionally, the method comprises curing the concrete building material after imparting the textured surface on the concrete building material in order to harden the textured building product.

A further aspect of the teachings provides a building product manufactured by the method of any preceding claim.

Optionally, the building product is a brick or a rooftile.

A further aspect of the teachings provides a method of manufacturing a textured embosser for imparting a textured surface to a building material, the method comprising:
a) creating a heightmap of a textured surface;
b) using the heightmap to create a 3D model of a textured embosser having the textured surface; and
c) using additive manufacturing to produce a textured embosser based on the 3D model.

Such a method of manufacturing a textured embosser involves a digital process for producing the textured embosser. This facilitates the use of various digital tools such as artificial intelligence algorithms to increase flexibility in the number of different textured surfaces that can be provided on the textured embosser.

It will be understood that various commercially available additive manufacturing apparatuses (also known as "3D printers") could be used to produce the textured embosser, e.g., "Prusa XL" or "Bambu S1 Carbon".

Optionally, the textured embosser is a textured cylindrical roller.

Such a textured cylindrical roller may be used as a roller stamp to roll along a surface of a building material (e.g., a clay building material) to impart the textured surface thereon.

Optionally, step b) comprises applying the heightmap to a 3D model of a cylindrical roller having the textured surface on an external surface thereof.

It will be understood that various commercially available software tools could be used to create the 3D model of the textured cylindrical roller (i.e., to apply the heightmap to a cylindrical mesh), e.g., "Blender".

A further aspect of the teachings provides a textured embosser manufactured by a method as disclosed herein.

### BRIEF DESCRIPTION OF DRAWINGS

Embodiments will now be described by way of example only with reference to the accompanying figures, in which:
Figure 1 is a flow chart of a method of manufacturing a textured building product according to an embodiment of the invention;
Figure 2 is a schematic perspective view of a textured embosser which can be used in the method of Figure 1;
Figure 3 is an exploded perspective view of another textured embosser which can be used in the method of Figure 1;
Figure 4 is a schematic view of an embossing assembly which can be used in the method of Figure 1, and which includes multiple textured embossers of the kind illustrated in Figures 2 and 3;
Figure 5 is a flow chart of a method of manufacturing a textured building product according to a further embodiment of the invention;
Figure 6 is a schematic side view of an embossing assembly which can be used in the method of Figure 5, and which includes multiple textured embossers of the kind illustrated in Figures 2 and 3;
Figure 7 is a schematic cross-sectional view of a mould having a textured embosser provided as an insert therein, according to a further embodiment of the invention;
Figure 8 is a flow chart of a method of additively manufacturing a textured embosser of the kind illustrated in Figures 2 and 3;
Figure 9 is a schematic illustration of a step of the method of Figure 8 in which first and second embosser portions are joined together to form a textured embosser;
Figure 10 is a flow chart of a method of creating a heightmap of a textured surface which can be used in the methods of Figures 1 and 5, the method involving performing a 3D scan of an existing textured surface;
Figure 11 is a flow chart of a further method of creating a heightmap of a textured surface which can be used in the methods of Figures 1 and 5, the method involving performing a 3D scan of an existing textured surface;
Figure 12 is a flow chart of a further method of creating a heightmap of a textured surface which can be used in the methods of Figures 1 and 5, the method involving converting an image of a textured surface to a heightmap;
Figure 13 is a flow chart of a further method of creating a heightmap of a textured surface which can be used in the methods of Figures 1 and 5, the method involving converting a procedural texture to a heightmap;
Figure 14 is a flow chart of a further method of creating a heightmap of a textured surface which can be used in the methods of Figures 1 and 5, the method involving converting a blended procedural texture to a heightmap; and
Figure 15 is a flow chart of a further method of manufactured a textured building product, according to a further embodiment of the invention.

### DETAILED DESCRIPTION

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

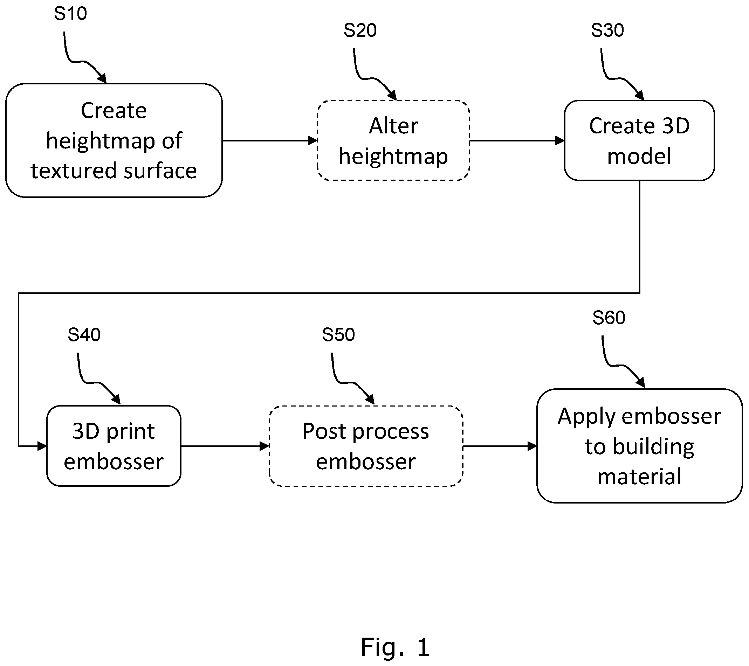

With reference to Figure 1, a method of manufacturing a textured building product is illustrated as a flow chart. In this context, the term "building product" may refer to a discrete block or slab of building material which can be used with other textured building products of the same kind to construct a building structure or surface (e.g., of a residential, industrial or commercial building). For example, the textured building product may be a brick, brick slip, floor tile, roof tile, wall tile, paving member or breeze block (e.g., of clay or concrete material)

The method of Figure 1 involves creating heightmap of a textured surface 14 (at step S10). As will be described in more detail below, the heightmap of the textured surface 14 may be created using various different techniques.

The method of Figure 1 also involves using the heightmap to create a 3D model of a textured embosser 10 comprising the textured surface 14 (at step S30). It will be understood that various commercially available software tools could be used to create the 3D model of the textured embosser 10 (e.g., to apply the heightmap to a 3D mesh), e.g., "Blender". Therefore, this step will not be described in more detail.

The method of Figure 1 also involves using additive manufacturing to produce a textured embosser 10 based on the 3D model (at step S40). In this context, the term "textured embosser" may be used to refer to any textured object which can be used to impart a textured surface 14 onto a building material 30. For example, a textured cylindrical roller which can be rolled along a building material 30 to impart a textured surface 14 to the building material 30 may be considered a "textured embosser". Similarly, a hollow mould having a textured internal surface for imparting a textured surface 14 to building material 30 received in the mould (e.g., by compressing semi-solid building material into the mould, or by hardening/curing a building material slurry in the mould) may also be considered a "textured embosser".

It will be understood that various commercially available additive manufacturing apparatuses (also known as "3D printers") could be used to produce the textured embosser 10, e.g., "Prusa XL" or "Bambu S1 Carbon".

The method of Figure 1 also involves imparting the textured surface 14 of the textured embosser 10 onto a surface 32 of a building material 30 to produce a textured building product 34 (at step S60). For example, the building material 30 may be a clay or concrete building material. In other words, the method may involve imparting the textured surface 14 of the textured embosser 10 onto the surface 32 of clay or concrete building material 30 to produce a clay or concrete textured building product 34 (at step S60).

The method illustrated in Figure 1 involves a digital process for producing the textured embosser 10. This facilitates the use of various digital tools such as artificial intelligence algorithms to increase flexibility in the number of different textured surfaces 14 that can be provided on the textured embosser 10. Therefore, through step S60 the method facilitates increased flexibility in the number of different textured building products 34 (e.g., bricks, brick slips, breeze blocks, tiles, paving members, cladding members, etc.) that can be produced.

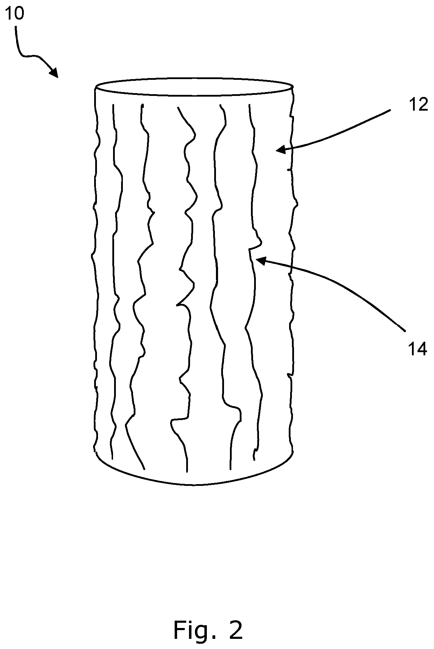

An example of a textured embosser 10 that may be produced by the method of Figure 1 is illustrated in Figure 2. In the embodiment of Figure 2, the textured embosser 10 is a textured cylindrical roller having an external surface 12. The textured surface 14 is provided on the external surface 12 of the cylindrical roller 10. As will be described in more detail below, such a textured cylindrical roller 10 may be used as a roller stamp embosser to roll along a surface 32 of a building material 30 (e.g., a clay or concrete building material) to impart the textured surface 14 thereon.

In embodiments where the textured embosser 10 is a textured cylindrical roller, it will be understood that step S30 may involve applying the heightmap to a 3D model of a cylindrical roller having the textured surface on an external surface thereof (e.g., by applying the heightmap to a cylindrical mesh). It will be understood that various commercially available software tools could be used to create the 3D model of the textured cylindrical roller (e.g., to apply the heightmap to a cylindrical mesh), e.g., "Blender". Therefore, this step will not be described in more detail.

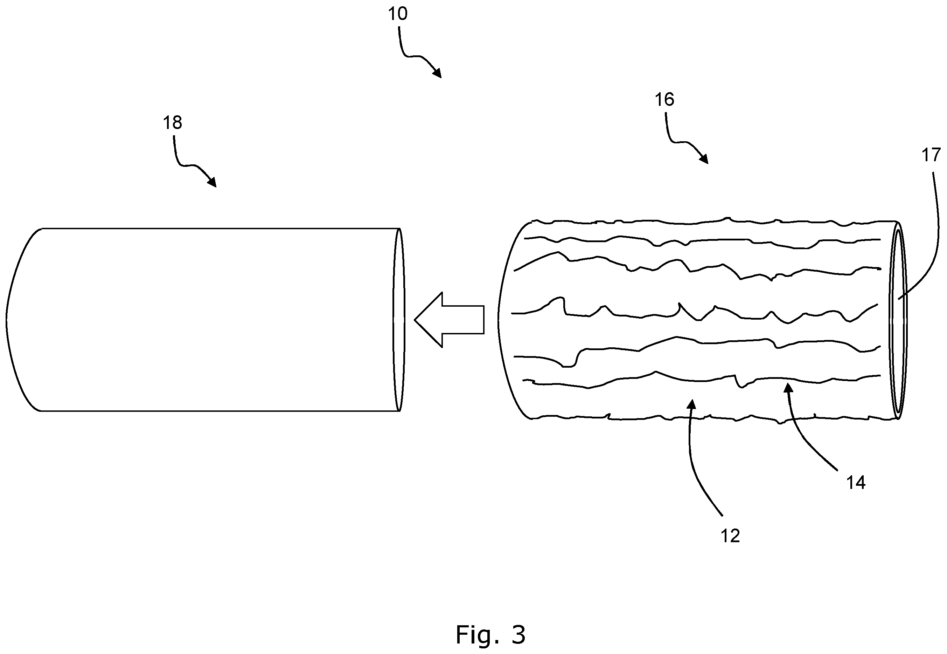

In some embodiments, the textured cylindrical roller 10 has a hollow cylindrical sleeve 16 which includes the textured surface 14. For example, such a hollow cylindrical sleeve 16 is illustrated in Figure 3. It will be understood that additive manufacturing may be slower and more expensive than other manufacturing techniques, but that it offers an easier means of producing a textured object from a 3D model. By printing the textured surface 14 on a hollow cylindrical sleeve 16, the textured cylindrical roller 10 can be manufactured more quickly than a solid additively manufactured alternative. As illustrated in Figure 3, the hollow cylindrical sleeve 16 includes an internal bore 17.

In embodiments where the textured cylindrical roller 10 has a hollow cylindrical sleeve 16, step S40 of the method of Figure 1 may further involve sliding the hollow cylindrical sleeve 16 onto a cylindrical core 18 (e.g., as indicated by the block arrow on Figure 3). In other words, the cylindrical core 18 may be located inside the internal bore 17 of the hollow cylindrical sleeve 16. By sliding the hollow cylindrical sleeve 16 onto a cylindrical core 18 (e.g., a core produced by a traditional manufacturing technique) a textured cylindrical roller 10 with increased rigidity and structural strength can be provided. Further, such a combination of hollow cylindrical sleeve 16 and cylindrical core 18 may be produced more cheaply and quickly than a solid roller produced via additive manufacturing. In addition, this configuration may allow interchanging different hollow cylindrical sleeves 16 on the cylindrical core 18 for production of different textured building products 34.

In other embodiments, the textured cylindrical roller 10 may be additively manufactured as a solid and/or integrally formed roller, instead of having a separate hollow cylindrical sleeve 16 and cylindrical core 18.

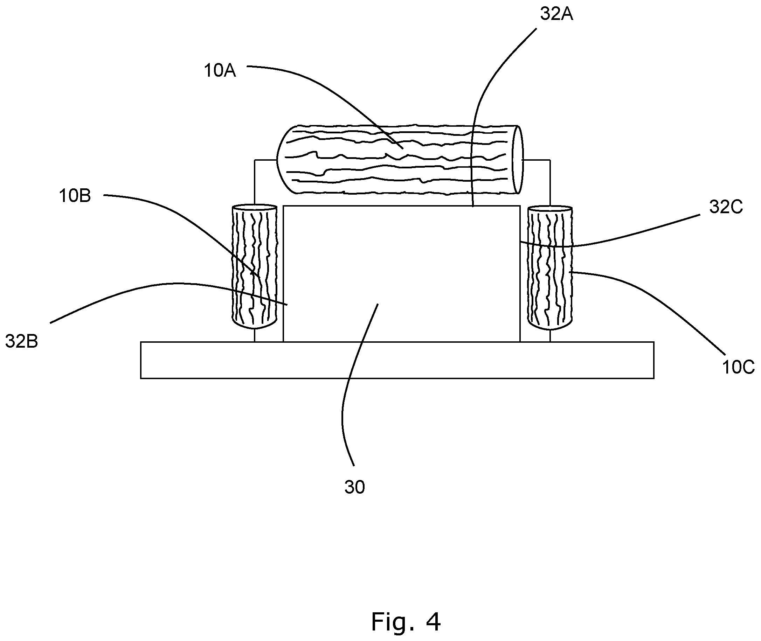

In embodiments where the textured embosser 10 is a textured cylindrical roller, step S60 of the method of Figure 1 may involve extruding an elongate length of the building material 30 and imparting the textured surface 14 along the elongate length of the extruded building material 30 with the textured cylindrical roller 10. For example, Figure 4 illustrates an embossing assembly in which an upper textured cylindrical roller 10A is arranged to impart a textured surface 14 onto an upper surface 32A of an extruded building material 30.

In some embodiments, the method of Figure 1 described above may be adapted to involve multiple textured embossers 10. For example, in the embossing assembly of Figure 4, left and right cylindrical rollers 10B, 10C are arranged to impart textured surfaces 14 onto left and right side surfaces 32B, 32C of the extruded building material 30, in addition to the upper textured cylindrical roller 32A.

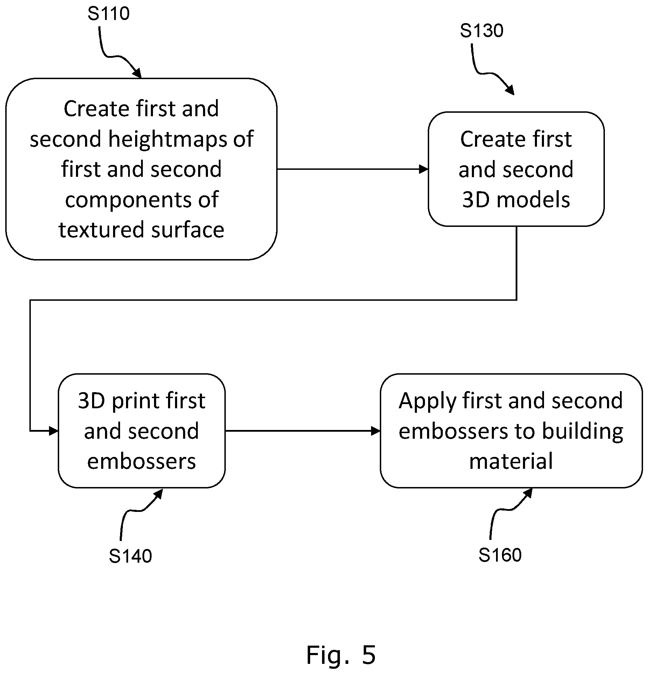

As another example, Figure 5 illustrates a modified version of the method of Figure 1 which involves creating a first heightmap of a first component 14A of the textured surface 14, and creating a second heightmap of a second component 14B of the textured surface 14 (at step S110). The method of Figure 5 also involves using the first and second heightmaps to create 3D models of first and second textured embossers 10A, 10B having the respective components 14A, 14B of the textured surface 14 (at step S130). The method of Figure 5 also involves using additive manufacturing to produce first and second textured embossers 10A, 10B based on the 3D models (at step S140). The method of Figure 5 also involves imparting the first component 14A of the textured surface 14 onto a surface 32 of a building material 30 using the first textured embosser 10A and then imparting the second component 14B of the textured surface 14 onto the surface 32 of the building material 30 using the second textured embosser 10B to produce a textured building product 34.

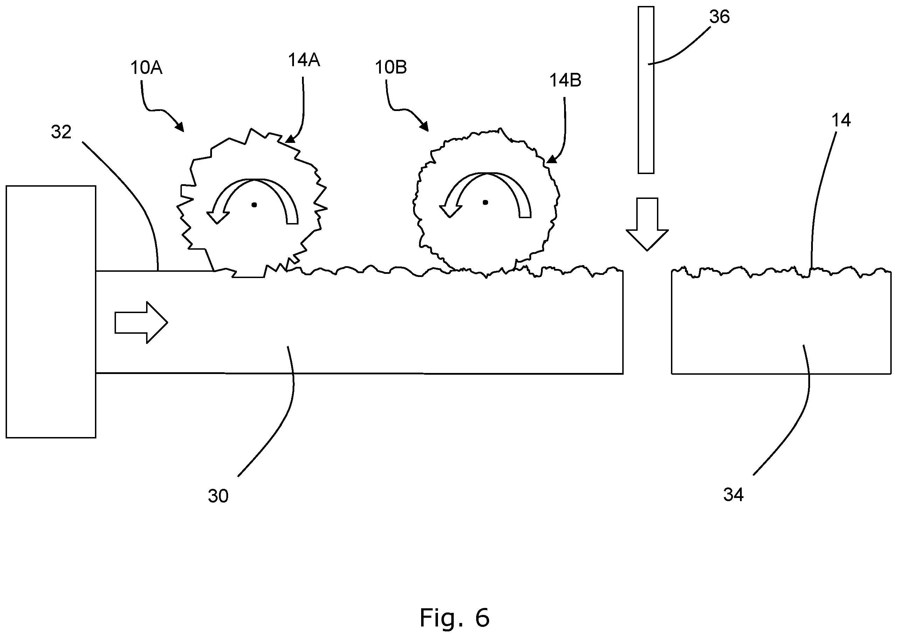

An example of an embossing assembly for performing such a method is illustrated in Figure 6. In this embodiment, the first and second textured embossers 10A, 10B are textured cylindrical rollers (as described above with references to Figures 2 to 4). The textured cylindrical rollers 10A, 10B are applied to an extruded length of building material 30 to impart the first and second components 14 of the textured surface 14 to a surface 32 of the building material 30 in a similar manner to that described above with reference to Figure 4.

In the embodiment of Figure 6, the textured surface 14 has a plurality of peaks each defining a height and a plurality of troughs each defining a depth. The first component 14A of the textured surface 14 comprises heights and depths above a predetermined threshold, and the second component 14B of the textured surface 14 defines heights and depths below the predetermined threshold. In other words, the first component 14A of the textured surface 14 has taller and deeper peaks and troughs than the second component 14B of the textured surface 14.

In the embodiment of Figure 6, the textured surface 14 has a plurality of widths between adjacent peaks and troughs. The first component 14A of the textured surface 14 comprises widths above a predetermined threshold, and the second component 14B of the textured surface 14 comprises widths below said predetermined threshold. In other words, the first component 14A of the textured surface 14 has narrower peaks and troughs than the second component 14B of the textured surface 14.

It will be understood that, in the configuration of Figure 6, the first textured cylindrical roller 10A is configured to impart "macro" surface variations to the building material 30, while the second textured cylindrical roller 10B is configured to impart "micro" surface variations to the building material 30. In this way, the first and second textured cylindrical rollers 10A, 10B together impart a blended textured surface 14 to the building material 30 having both macro and micro components 14A, 14B.

In other embodiments, the first and second components 14A, 14B of the textured surface 14 may differ from each other in different ways to the embodiment of Figure 6. For example, the first component 14A of the textured surface 14 may comprise generally larger features (e.g., larger in at least one dimension) than the second component 14B of the textured surface.

In embodiments where the textured surface 14 is imparted along an elongate length of extruded building material 30 (e.g., as illustrated in Figures 4 and 6), step S60 (or step S160) of the method may further comprise cutting the extruded building material 30 after the textured surface 14 has been imparted, to form a plurality of textured building products 34. For example, the embossing apparatus of Figure 6 includes a cutter 36 which may be used to perform such a cutting operation (e.g., by lowering from the position illustrated in Figure 6, to cut into the extruded building material 30). Any suitable cutter 36 may be used (e.g., a guillotine, cutting wire, saw blade, knife blade, etc.). Such a method facilitates manufacturing of textured building products 34 of different lengths (e.g., by modifying the length between cuts in the building material 30). Using textured cylindrical rollers 10, 10A, 10B, 10C to impart a textured surface 14 to an extruded length of building material 30 may also facilitate production of elongate building products 34 that would require long moulds to be manufactured using alternative techniques.

The building product 34 illustrated in Figure 6 is a brick. In other embodiments, the building product 34 may be another type of building product, such as a brick slip, floor tile, roof tile, wall tile, paving member, cladding member, etc.

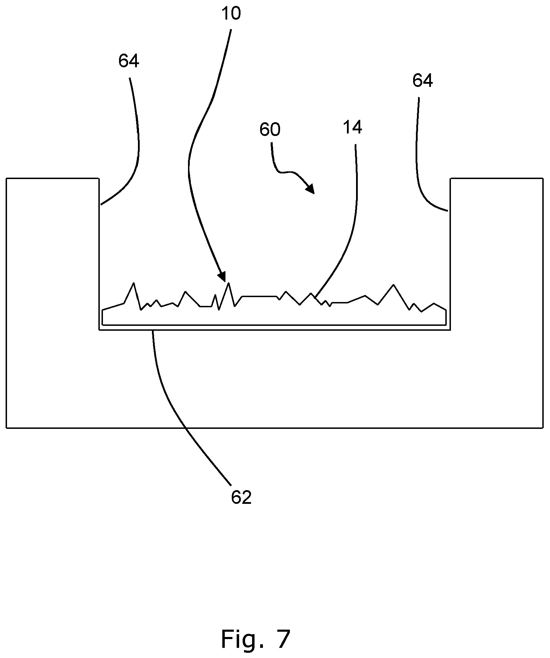

Although the embodiments of Figures 2 to 4 and 6 illustrate textured embossers 10 in the form of textured cylindrical rollers 10, it will be understood that in other embodiments, the textured embosser(s) 10, 10A, 10B used in the methods of Figures 1 and 5 may instead be substantially flat mould(s). For example, in the embodiment of Figure 7 a building material receptacle 60 having a base 62 and one or more side walls 64 is provided, and the substantially flat mould 10 is located on the base 62 of the receptacle 60. In other words, the substantially flat mould 10 is in the form of a textured insert for the receptacle 60. In this way, when building material 30 is input to the receptacle 62 (and, optionally, compressed) the textured surface 14 is imparted onto the building material 30.

In other embodiments, the textured embosser may be a hollow mould having a textured internal surface. In other words, the textured surface 14 may be provided directly on the base 62 of the receptacle 60, rather than on a flat textured insert.

In other embodiments, the textured embosser may be a cylindrical casting mould. In such embodiments, step S30 (or step S130) may involve applying the heightmap to a hollow cylindrical mesh to create a 3D model of a cylindrical casting mould having the textured surface 14 on an internal surface thereof. The casting mould may be used to cast a cylindrical body having the textured surface 14 on an external surface thereof.

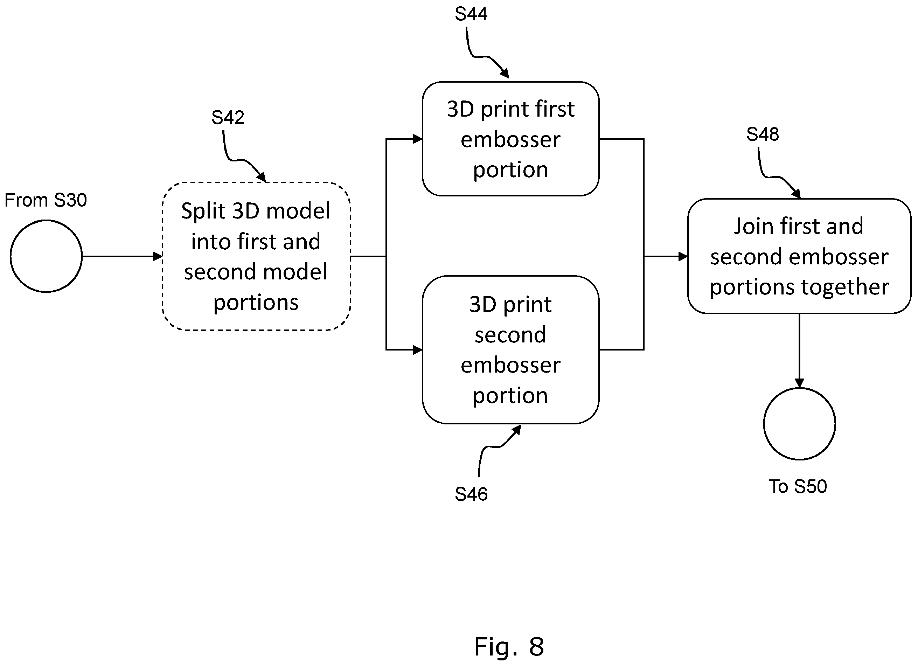

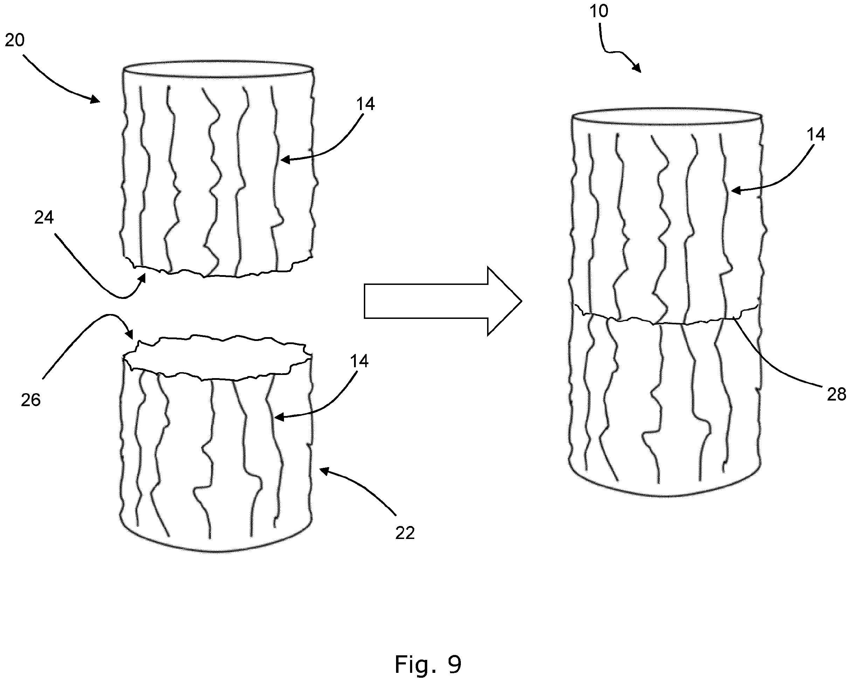

Referring now to Figures 8 and 9, step S40 or step S140 of the methods described above may involve producing a first embosser portion 20 in a first additive manufacturing stage (at step S44), producing a second embosser portion 22 in a second additive manufacturing stage (at step S46), and joining the first and second embosser portions 20, 22 together to form the textured embosser 10 (at step S48).

As illustrated in Figure 9, the first embosser portion 20 has a first interface end 24 and the second embosser portion 22 has a second interface end 26. The first and second interface ends 24, 26 are configured to abut each other for joining the first and second embosser portions 20, 22 together. In this way, a textured embosser 10 can be produced which is bigger than the maximum size of object than can be produced with the additive manufacturing apparatus which is used to perform the additive manufacturing process.

In the embodiment of Figure 9, the first and second interface ends 24, 26 have complementary non-linear profiles. For example, the complementary non-linear profiles may track a profile of the textured surface 14. For example, in Figure 9 the complementary non-linear profiles define a jagged intersection between the first and second embosser portions 20, 22. This may reduce the likelihood of the seam 28 between the first and second embosser portions 20, 22 being visible when the textured surface 14 is imparted onto the surface 32 of the building material 30 to form the building products 34.

In Figure 8, the method involves the optional step S42 of splitting the 3D model into first and second model portions for producing the first and second embosser portions 20, 22. It will also be understood that various commercially available software tools could be used to split the 3D model into first and second model portions, e.g., "Blender". Therefore, this step will not be described in more detail.

Referring again to Figure 1, the method may include the optional step of post processing the textured embosser 10 before applying the textured embosser 10 to the building material 30 (at step S50). For example, a brim may be printed on the textured embosser 10 during the additive manufacturing process to aid adhesion to a bed of the additive manufacturing apparatus. Such a brim may be removed during the post processing step. Although the post processing step S50 is not illustrated in Figures 5 or 8, it will be understood that such a post processing step S50 may also be performed in either of those methods.

The textured embossers 10, 10A, 10B, 10C described above may be produced from a plastics material, which may be cheaper and easier to use in an additive manufacturing process than other materials.

In some embodiments the plastics material may be a substantially rigid material. Rigid plastics material may be particularly beneficial for prototype textured embossers 10, which may be imparted onto building material 30 by hand during a prototyping process. In particular, less compression force may be required to impart the textured surface 14 of the textured embosser 10 onto a building material than more flexible alternatives. In some embodiments, rigid bioplastic material may be used, e.g., a polylactic acid material (PLA). Rigid bioplastic such as PLA is cheap and fast to print in an additive manufacturing process, which makes it a particularly suitable choice for producing prototype textured embossers 10.

In other embodiments, the plastics material may be an elastic plastics material, which may be particularly beneficial for flexibility and impact resistance for long-term use (e.g., as part of an automated building product manufacturing line). In some embodiments, a polyurethane plastics material may be used, e.g., a thermoplastic polyurethane material (TPU). Polyurethane plastics material such as TPU is an example of an elastic plastics material which is suitable for additive manufacturing and for long term use. In some embodiments, a high flow thermoplastic polyurethane material (TPU-HF) may be used. TPU-HF may be particularly beneficial for faster additive manufacturing of the textured embosser.

In the methods described above, the building material 30 may be a clay building material. In such embodiments, the method may involve firing the clay building material 30 after imparting the textured surface 14 on the clay building material 30 in order to harden the textured building product 34.

In some embodiments, the clay building material 30 has a water content in the range of about 18% to about 24%. Such a clay building material 30 has been found to be particularly beneficial for manufacturing building products, since it is plastic in nature making it suitable for shaping, imparting and retaining a texture on a building product. It will be understood that if the clay building material 30 has a water content that is too high (e.g. much greater than 24%) the clay building material 30 would be too viscous for the textured surface 14 of the textured embosser 10 to be imparted on the building product 34 (e.g. the clay building material 30 may not maintain its shape after the textured embosser 10 has been applied to the clay building material 30). Furthermore, a high clay water content requires more energy when firing the building product 34 in a kiln or similar apparatus. It will also be understood that if the clay building material 30 has a water content that is too low, the clay building material 30 may not be plastic enough for the textured surface 14 of the textured embosser 10 to be imparted on the building product 34 (e.g., even under the application of pressure).

In alternative embodiments, the building material 30 may comprise concrete building material (e.g., a semi-solid concrete building material, or a concrete slurry material). In such embodiments, the method may involve curing the concrete building material 30 after imparting the textured surface 14 on the concrete building material 30 in order to harden the textured building product 34.

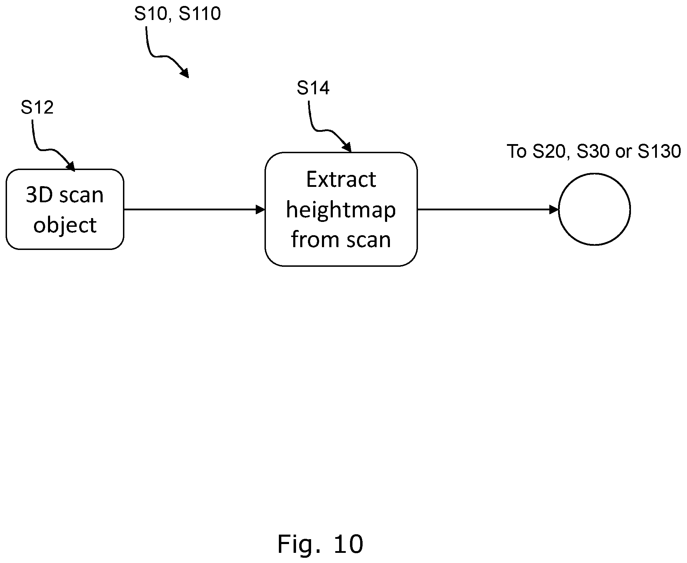

Referring now to Figures 10 to 14, different techniques for creating the heightmap of the textured surface 14 (at steps S10, S110) will be described in more detail.

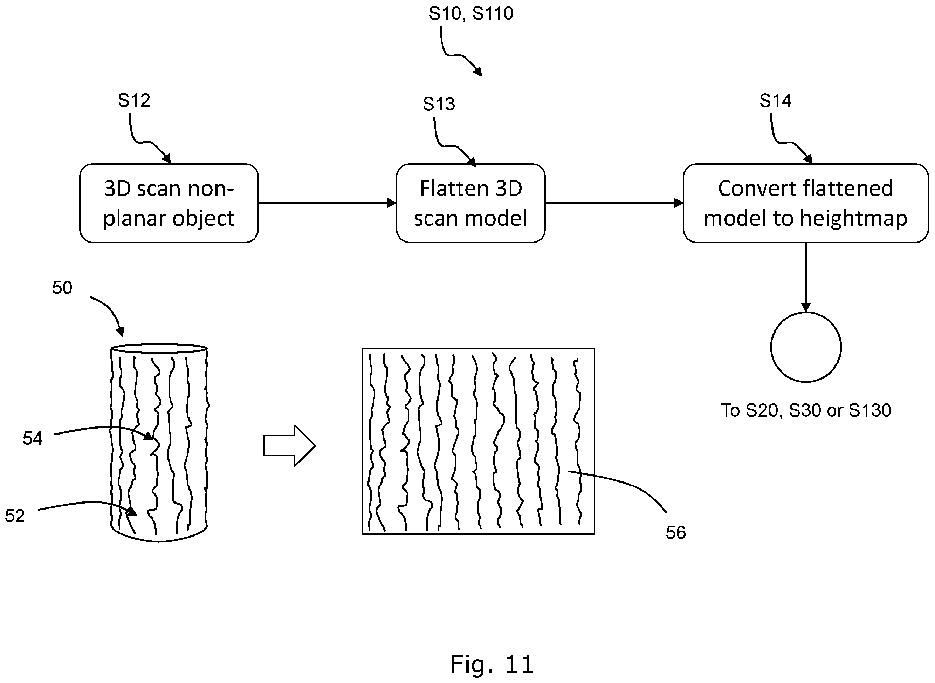

With reference to Figures 10 and 11, the step of creating a heightmap of a textured surface 14 may include performing a 3D scan of an existing textured object 50 to produce a 3D scan model (at step S12). It will be understood that various commercially available 3D scanners could be used to perform the 3D scan, e.g., "Creaform GoSCAN". Therefore, this step will not be described in more detail.

In Figures 10 and 11, the step of creating the heightmap of the textured surface 14 also involves converting the 3D scan model to a heightmap (at step S14). It will be understood that various commercially available software tools could be used to convert the 3D scan model to a heightmap, e.g., "Blender", or the "Grasshopper" scripting plugin for "Rhino3D". Therefore, this step will not be described in more detail.

In some embodiments, an artificial intelligence algorithm may be used to convert the 3D scan model to a heightmap.

In some embodiments, the existing textured object 50 has a non-planar textured surface. For example, in Figure 11 an existing textured cylindrical roller 50 is illustrated with a textured surface 54 on a cylindrical external surface 52 of the existing textured cylindrical roller 50. In such embodiments, the method may involve flattening the 3D scan model to produce a flattened model 56 having a planar version of the textured surface 54 (at step S13), and converting the flattened model to a heightmap (at step S14). In this way, a non-planar textured surface (e.g., a curved textured surface such as a cylindrical textured surface) can be converted to a planar representation which can more easily be converted to a heightmap. It will be understood that various commercially available software tools could be used to flatten the 3D scan model, e.g., "Rhino3D" or "Blender".

In some embodiments, the method involves using an artificial intelligence algorithm to flatten the 3D scan model.

In some embodiments, the existing textured object 50 may be a natural object, for example selected from one or more of an animal shell, a part of a tree such as branches or bark, a leaf, and/or a natural stone surface.

In some embodiments, the existing textured object 50 may be an existing building product, for example selected from one or more of a brick, a brick slip, a breeze block, a tile, a paving member, and/or a cladding member.

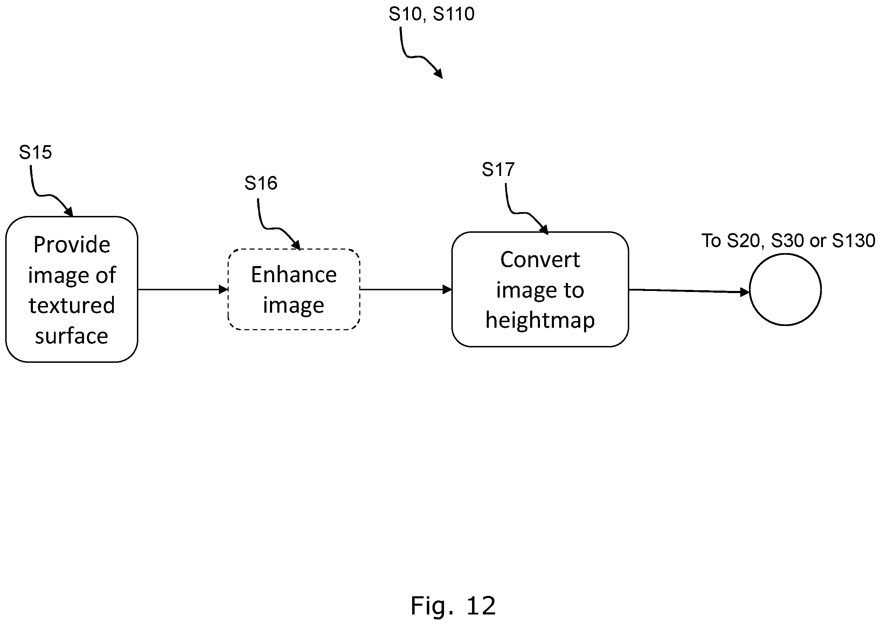

With reference to Figure 12, the step of creating a heightmap of a textured surface 14 may include converting an image of a textured surface 14 to a heightmap (at step S16).

It will be understood that various commercially available software tools could be used to convert the image of the textured surface 14 to a heightmap, e.g., "Adobe Substance Sampler". Therefore, this step will not be described in more detail.

In some embodiments, the method involves using an artificial intelligence algorithm to convert the image of the textured surface 14 to a heightmap.

The image of the textured surface may be provided (at step S15) by various different techniques.

In some embodiments the image of the textured surface 14 may be provided by capturing an image of an existing textured object using a camera. This provides a simple means of providing an image of a textured surface, since cameras are readily available and can be used to photograph a wide variety of textured surfaces.

In some embodiments, the existing textured object captured by the camera may be a natural object, for example selected from one or more of an animal shell, a part of a tree such as branches or bark, a leaf, and/or a natural stone surface.

In other embodiments, the existing textured object captured by the camera may be an existing building product, for example selected from one or more of a brick, a brick slip, a breeze block, a tile, a paving member, and/or a cladding member.

In some embodiments, the image of the textured surface 14 may be provided by using an artificial intelligence algorithm to generate an image of a new textured surface based on text and/or image prompts input to the artificial intelligence algorithm. This provides a simple means of providing an image of a textured surface. Further, this allows generation of new textured surfaces, which provides more flexibility in the number of different textured surfaces that can be produced in comparison to capturing images of existing textured surfaces.

It will be understood that various commercially available AI image generation software tools could be used to produce the generated image, e.g., "Adobe AI Image Generator", "Microsoft Designer" or "DeepAI". Therefore, this step will not be described in more detail.

In some embodiments, the artificial intelligence algorithm may directly produce the heightmap of the textured surface based on text and/or image prompts, rather than creating an image which can then be converted to a heightmap.

In some embodiments, the image of the textured surface 14 may be provided by manually creating an image of a new textured surface. For example, an image of a decorative pattern to be imparted on a building product 34 may be manually created using digital artistic software or graphic design software.

In the embodiment of Figure 12, the method also includes the optional step of enhancing the image (at step S16) prior to converting the image to a heightmap. For example, at step S16 an artificial intelligence algorithm may be used to enhance the image. Examples of ways in which the image may be enhanced (e.g., by using an artificial intelligence algorithm, such as one of those included in Adobe Substance Sampler) include: increasing a resolution of the image; and/or adding depth to one or more patterns in the image; and/or generating a new image which is an interpretation of the original image; and/or adding more detail to the image.

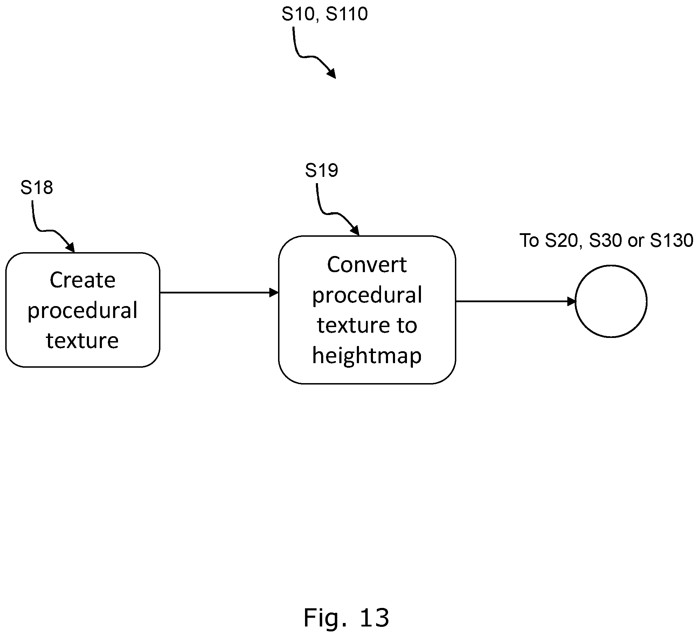

With reference to Figure 13, the step of creating a heightmap of a textured surface 14 may include creating a procedural texture which defines a mathematical description of a textured surface 14 (at step S18), and converting the procedural texture to a heightmap (at step S19). In this context, the term "procedural texture" will be understood to mean a texture created using mathematical algorithms (e.g., to simulate natural materials such as wood, marble, or stone, and/or more complex textures combining multiple different textures). Such a procedural texture may be expanded indefinitely with a certain degree of randomness. This may be beneficial for producing large building products where it is undesirable to see repetition of patterns in the textured surface.

It will be understood that various commercially available software tools could be used to create the procedural texture, e.g., "Adobe Substance Designer". Therefore, this step will not be described in more detail.

In some embodiments, the step of creating the procedural texture involves using an artificial intelligence algorithm to generate the procedural texture. For example, text, voice or image prompts may be input to an artificial intelligence algorithm to generate the procedural texture.

In some embodiments, the step of creating the procedural texture involves selecting one or more predefined procedural textures from a library of procedural textures.

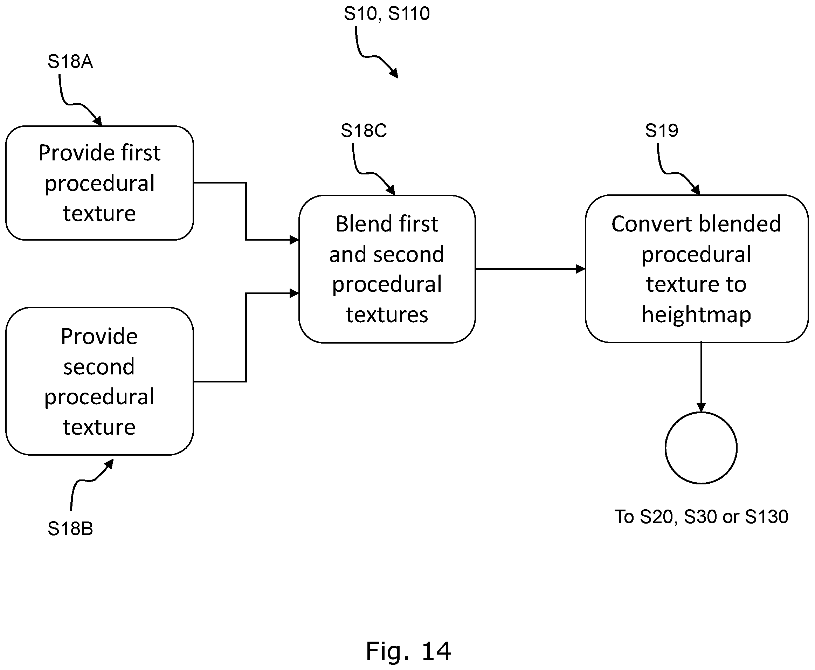

In some embodiments, the step of creating the procedural texture involves blending at least two individual procedural textures to produce a blended procedural texture. For example, Figure 14 illustrates a modified version of the method steps of Figure 13 in which a first procedural texture is provided (at step S18A), a second procedural texture is provided (at step S18B) and the first and second procedural textures are blended together to produce the blended procedural texture (at step S18C). In such embodiments, the first and/or second procedural textures may be created using any of the methods described above. Blending at least two individual procedural textures facilitates production of new procedural textures. For example, the first procedural texture may simulate a natural material, such as wood, and the second procedural texture may be representative of white noise.

In some embodiments, instead of blending two or more procedural textures together, the method may involve producing a first textured embosser 10 based on a first procedural texture and producing a second textured embosser 10 based on a second procedural texture. The method may then involve imparting a first textured surface 14 of the first textured embosser 10 onto a surface 32 of a building material 30 and then imparting a second textured surface 14 of the second textured embosser 10 onto the surface 32 of the building material 30 to produce a textured building product 34. For example, the first and second textured embossers 10A, 10B of Figure 6 may be created using first and second procedural textures respectively. In other words, the first and second textured embossers 10A, 10B may define first and second components 14A, 14B of a blended textured surface 14 (e.g., as described above with reference to Figures 5 and 6), the first and second components 14A, 14B being defined by the respective procedural textures.

Referring again to Figure 1, the method may include the optional step of altering the heightmap to produce a modified heightmap (at step S20) prior to creating the 3D model (at step S30). The step of altering the heightmap may be present regardless of how the original heightmap is created (e.g., following any of the steps outlined in Figures 10 to 14). Such a method may allow customisation and/or tuning of the heightmap to change the size and/or aesthetics of the textured surface 14.

It will be understood that various commercially available software tools could be used to alter the heightmap, e.g., "Adobe Photoshop".

In some embodiments, step S20 involves using an artificial intelligence algorithm to alter the heightmap.

In some embodiments, the step of altering the heightmap involves applying a high pass filter to the heightmap. Applying a high pass filter to the heightmap may remove the effects of macro scale surface variations.

In some embodiments, the step of altering the heightmap involves expanding the area of the heightmap to produce an enlarged heightmap. For example, the method may comprise expanding the X and/or Y dimensions of the heightmap. In this way, a larger 3D model can be made which allows production of a larger textured embosser having the textured surface 14.

In some embodiments, an artificial intelligence algorithm may be used to expand the area of the heightmap. For example, the artificial intelligence algorithm may be an AI image generation algorithm configured to outpaint the heightmap.

It will be understood that various commercially available software tools could be used to produce the enlarged heightmap, e.g., "Adobe AI Fill". Therefore, this step will not be described in more detail.

In embodiments where the textured embosser 10 is a textured cylindrical roller (as illustrated in Figures 2 to 4, 6 and 9), the step of altering the heightmap may involve adjusting one or more edges of the heightmap so that there is no seam when the heightmap is applied to the 3D model of the cylindrical roller. For example, the step of adjusting one or more edges of the heightmap may involve offsetting a canvas of the heightmap and filling in a seam, e.g., using an AI image generation algorithm configured to fill the seam. In this way, the textured cylindrical roller 10 can be used to produce continuous or "seamless" textured surfaces on building products 34. It will be understood that various commercially available software tools could be used to fill in the seam, e.g., "Adobe AI Fill".

In some embodiments, the step of altering the heightmap may involve increasing a depth of the heightmap to produce the modified heightmap, e.g., using an artificial intelligence algorithm. In this way, a 3D model with a more pronounced textured surface can be created. This may be useful for imparting a more pronounced textured surface on a building product 34. In other words, the method may involve increasing the height difference between peaks and troughs of the original heightmap. Put another way, the method may involve upscaling the height dimension of the original heightmap.

In some embodiments, the step of altering the heightmap involves rotating the heightmap about a centre of the heightmap to produce the modified heightmap (e.g., rotating through 90 degrees).

In some embodiments, the step of altering the heightmap involves increasing a resolution of the heightmap to produce the modified heightmap (e.g., using an artificial intelligence algorithm). In this way, a more detailed textured surface 14 can be provided on the textured embosser 10. It will be understood that various commercially available software tools could be used to increase the resolution of the heightmap, e.g., "AI Upscale".

In other embodiments, the heightmap may be altered at step S20 in other ways not mentioned above.

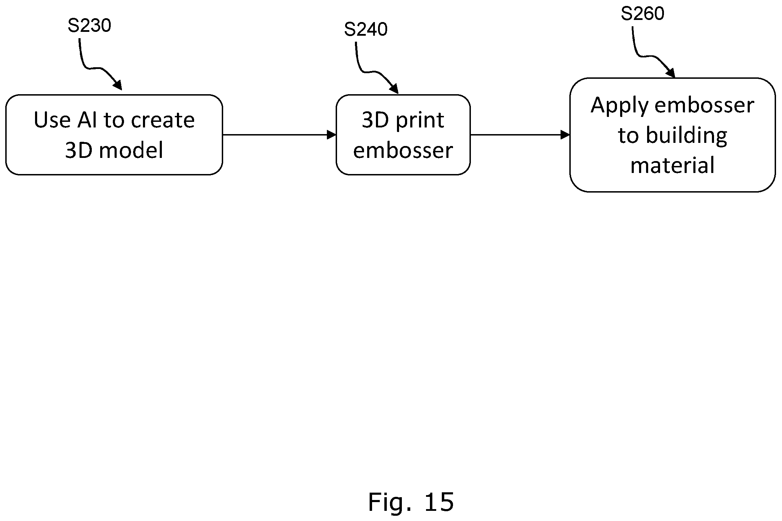

The methods described above with reference to Figures 1 to 14 involve the step of creating a heightmap and then converting the heightmap to a 3D model in order to additively manufacture the textured embosser 10. However, it will be understood that in other embodiments a 3D model of the textured embosser may be created without the use of heightmaps (e.g., by creating the 3D model in 3D design software and/or via a generative artificial intelligence algorithm). For example, Figure 15 illustrates a method of manufacturing a textured building product 34 without the use of heightmaps.

The method of Figure 15 involves using an artificial intelligence algorithm to create a 3D model of a textured embosser 10 having a textured surface 14 (at step S230).

The method of Figure 15 also involves using additive manufacturing to produce a textured embosser 10 based on the 3D model (at step S240). This step may be identical to step S40 of Figure 1 or step S140 of Figure 5, as described above. Therefore, this step will not be described in more detail to avoid repetition.

The method of Figure 15 also involves imparting the textured surface 14 of the textured embosser 10 onto a surface 32 of a building material 30 to produce a textured building product 34 (at step S260). This step may be identical to step S60 of Figure 1 or step S160 of Figure 5, as described above. Therefore, this step will not be described in more detail to avoid repetition.

Such a method as illustrated in Figure 15 involves use of an artificial intelligence algorithm to create the 3D model, which increases flexibility in the number of different textured surfaces 14 that can be provided on the textured embosser 10. For example, text or image prompts could be input to the artificial intelligence algorithm to generate a new textured surface. Therefore, through step S260 the method facilitates increased flexibility in the number of different textured building products (e.g., bricks, breeze blocks, tiles, paving members, cladding members, etc.) that can be produced.

In some embodiments, the step of using an artificial intelligence algorithm to create a 3D model involves generating a 3D model based on text and/or image prompts input to the artificial intelligence algorithm.

In some embodiments, the step of using an artificial intelligence algorithm to create a 3D model involves performing a 3D scan of an existing textured object to produce a 3D scan model, and modifying the 3D scan model using an artificial intelligence algorithm. For example, a 3D scan may be performed as described above with reference to Figures 10 and 11, but the 3D scan model may be modified directly using an artificial intelligence algorithm (e.g., to enlarge the size of the 3D model), rather than via an intermediate step of converting the 3D scan model to a heightmap.

In some embodiments, the step of using an artificial intelligence algorithm to create a 3D model involves converting an image of a textured surface to a 3D model using an artificial intelligence algorithm. For example, an image may be provided as described above with reference to Figure 12, but the image may be converted directly to a 3D model using an artificial intelligence algorithm, rather than via an intermediate step of converting the image to a heightmap.

In some embodiments, the method of Figure 15 involves enhancing the image prior to converting to a 3D model. Examples of ways in which the image may be enhanced (e.g., by using an artificial intelligence algorithm) include: increasing a resolution of the image; and/or adding depth to one or more patterns in the image; and/or generating a new image which is an interpretation of the original image; and/or adding more detail to the image.

In some embodiments, the step of using an artificial intelligence algorithm to create a 3D model comprises using the artificial intelligence algorithm to generate a procedural texture and converting the procedural texture to a 3D model (e.g., using text and/or image prompts input to the artificial intelligence algorithm).

The one or more embodiments are described above by way of example only and it will be appreciated that the variations are possible without departing from the scope of protection afforded by the appended claims. For example, the optional steps S20, S50, S42, S16 may be omitted from any of the methods of Figures 1 to 15 in which they are shown and/or may be added to any of the methods of Figures 1 to 15 in which they are not shown.

It should also be noted that whilst the appended claims set out particular combinations of features described above, the scope of the present disclosure is not limited to the particular combinations hereafter claimed, but instead extends to encompass any combination of features herein disclosed.

## Claims

1. A method of manufacturing a textured building product, the method comprising:
a) creating a heightmap of a textured surface;
b) using the heightmap to create a 3D model of a textured embosser comprising the textured surface;
c) using additive manufacturing to produce a textured embosser based on the 3D model; and
d) imparting the textured surface of the textured embosser onto a surface of a clay or concrete building material to produce a clay or concrete textured building product.

2. The method of claim 1, wherein the textured building product comprises a discrete block or slab of building material which can be used with other textured building products of the same kind to construct a building structure or surface; optionally, wherein the textured building product comprises a brick, brick slip, floor tile, roof tile, wall tile, paving member or breeze block.

3. The method of claim 1 or 2, wherein the textured embosser comprises a textured cylindrical roller, and wherein step b) comprises applying the heightmap to a 3D model of a cylindrical roller having the textured surface on an external surface thereof; optionally, wherein the textured cylindrical roller comprises a hollow cylindrical sleeve which includes the textured surface; optionally, wherein the method further comprises sliding the hollow cylindrical sleeve onto a cylindrical core.

4. The method of claim 3, wherein the step of producing a textured building product comprises extruding an elongate length of the building material and imparting the textured surface along the elongate length of the extruded building material with the textured cylindrical roller; optionally, wherein the method further comprises cutting the extruded building material after the textured surface has been imparted to form a plurality of textured building products.

5. The method of any preceding claim, wherein the method comprises:
a) creating a first heightmap of a first component of the textured surface, and creating a second heightmap of a second component of the textured surface;
b) using the first and second heightmaps to create 3D models of first and second textured embossers comprising the respective components of the textured surface;
c) using additive manufacturing to produce first and second textured embossers based on the 3D models; and
d) imparting the first component of the textured surface onto a surface of a building material using the first embosser and then imparting the second component of the textured surface onto the surface of the building material using the second embosser to produce a textured building product;
optionally, wherein the textured surface comprises a plurality of peaks each defining a height and a plurality of troughs each defining a depth, wherein the first component of the textured surface comprises heights and depths above a predetermined threshold, and the second component of the textured surface comprises heights and depths below said predetermined threshold.

6. The method of any preceding claim, wherein the step of creating a heightmap of a textured surface comprises performing a 3D scan of an existing textured object to produce a 3D scan model, and converting the 3D scan model to a heightmap; optionally, using an artificial intelligence algorithm; optionally, wherein the existing textured object comprises a non-planar textured surface and wherein the method comprises flattening the 3D scan model to produce a flattened model having a planar version of the textured surface, and converting the flattened model to a heightmap; optionally, wherein the method comprises using an artificial intelligence algorithm to flatten the 3D scan model.

7. The method of any of claims 1 to 5, wherein the step of creating a heightmap of a textured surface comprises converting an image of a textured surface to a heightmap; optionally, wherein the method comprises using an artificial intelligence algorithm to convert the image of the textured surface to a heightmap; optionally,
wherein the method comprises capturing an image of an existing textured object using a camera and converting the captured image to a heightmap; and/or
wherein the method comprises using an artificial intelligence algorithm to generate an image of a new textured surface based on text and/or image prompts input to the artificial intelligence algorithm, and converting the generated image to a heightmap; and/or
wherein the method comprises manually creating an image of a new textured surface, and converting the manually created image to a heightmap; and/or
wherein the method further comprises using an artificial intelligence algorithm to enhance the image prior to converting to a heightmap; optionally, wherein the method comprises using an artificial intelligence algorithm to: increase a resolution of the image, and/or add depth to one or more patterns in the image, and/or generate a new image which is an interpretation of the image, and/or add more detail to the image.

8. The method of any of claims 1 to 5, wherein the step of creating a heightmap of a textured surface comprises creating a procedural texture which defines a mathematical description of a textured surface, and converting the procedural texture to a heightmap; optionally, wherein the method comprises using an artificial intelligence algorithm to generate the procedural texture; and/or optionally, wherein the step of creating a procedural texture comprises blending at least two individual procedural textures to produce a blended procedural texture.

9. The method of any preceding claim, wherein the method comprises altering the heightmap to produce a modified heightmap prior to creating the 3D model;
optionally, wherein the method comprises using an artificial intelligence algorithm to alter the heightmap and/or wherein the step of altering the heightmap comprises applying a high pass filter to the heightmap; and/or
optionally, wherein the method comprises increasing a depth of the heightmap to produce the modified heightmap, optionally, using an artificial intelligence algorithm; and/or
optionally, wherein the method comprises rotating the heightmap about a centre of the heightmap to produce the modified heightmap, optionally, rotating through 90 degrees; and/or
optionally, wherein the method comprises increasing a resolution of the heightmap to produce the modified heightmap, optionally, using an artificial intelligence algorithm.

10. The method of claim 9, wherein the method comprises expanding the area of the heightmap to produce an enlarged heightmap; optionally, wherein the method comprises using an artificial intelligence algorithm to expand the area of the heightmap; optionally, wherein the artificial intelligence algorithm comprises an AI image generation algorithm configured to outpaint the heightmap.

11. The method of claim 9 or 10, wherein the textured embosser comprises a textured cylindrical roller, wherein step b) comprises applying the heightmap to a 3D model of a cylindrical roller having the textured surface on an external surface thereof, and wherein the step of altering the heightmap comprises adjusting one or more edges of the heightmap so that there is no seam when the heightmap is applied to the 3D model of the cylindrical roller; optionally, wherein the step of adjusting one or more edges of the heightmap comprises offsetting a canvas of the heightmap and filling in a seam, optionally using an AI image generation algorithm configured to fill the seam.

12. A method of manufacturing a textured building product, the method comprising:
a) using an artificial intelligence algorithm to create a 3D model of a textured embosser having a textured surface;
b) using additive manufacturing to produce a textured embosser based on the 3D model; and
c) imparting the textured surface of the embosser onto a surface of a clay or concrete building material to produce a clay or concrete textured building product.

13. The method of any of claims 1 to 12, wherein the step of using additive manufacturing to produce a textured embosser based on the 3D model comprises:
producing a first embosser portion in a first additive manufacturing stage;
producing a second embosser portion in a second additive manufacturing stage; and
joining the first and second embosser portions together to form the textured embosser;
optionally, wherein the first embosser portion has a first interface end and the second embosser portion has a second interface end, wherein the first and second interface ends are configured to abut each other for joining the first and second embosser portions together, and wherein the first and second interface ends have complementary non-linear profiles, optionally, wherein the complementary non-linear profiles track a profile of the textured surface.

14. The method of any preceding claim, wherein the textured embosser is produced from a plastics material; optionally, wherein the plastics material is a substantially rigid material such as a rigid bioplastic material, e.g., a polylactic acid material (PLA); or optionally, wherein the plastics material is an elastic plastics material such as a polyurethane plastics material, e.g., a thermoplastic polyurethane material (TPU), e.g., a high flow thermoplastic polyurethane material (TPU-HF).

15. The method of any preceding claim, wherein the building material comprises clay building material and wherein the method comprises firing the clay building material after imparting the textured surface on the clay building material in order to harden the textured building product; or wherein the building material comprises concrete building material and wherein the method comprises curing the concrete building material after imparting the textured surface on the concrete building material in order to harden the textured building product.
